(19) Europäisches Patentamt
European Patent Office
Office européen des brevets

(11) **EP 3 577 627 B1**

(12) **FASCICULE DE BREVET EUROPEEN**

(45) Date de publication et mention de la délivrance du brevet:
**11.08.2021 Bulletin 2021/32**

(21) Numéro de dépôt: **18708159.1**

(22) Date de dépôt: **17.01.2018**

(51) Int Cl.:
**G06T 5/00** *(2006.01)*

(86) Numéro de dépôt international:
**PCT/FR2018/050115**

(87) Numéro de publication internationale:
**WO 2018/142040 (09.08.2018 Gazette 2018/32)**

(54) **PROCEDE DE TRAITEMENT D'UNE IMAGE D'ENTREE, DISPOSITIF, EQUIPEMENT TERMINAL ET PROGRAMME D'ORDINATEUR ASSOCIE**

VERFAHREN ZUR VERARBEITUNG EINES EINGABEBILDES UND ZUGEHÖRIGE VORRICHTUNG, ENDGERÄTEAUSRÜSTUNG UND COMPUTERPROGRAMM

METHOD FOR PROCESSING AN INPUT IMAGE AND ASSOCIATED DEVICE, TERMINAL EQUIPMENT AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2017 FR 1750937**

(43) Date de publication de la demande:
**11.12.2019 Bulletin 2019/50**

(73) Titulaire: **Fondation B-COM**
**35510 Cesson-Sévigné (FR)**

(72) Inventeurs:
• **BIST, Cambodge**
**35700 Rennes (FR)**
• **COZOT, Rémi**
**22350 Yvignac La Tour (FR)**
• **MADEC, Gérard**
**35250 Chasne Sur Illet (FR)**

(74) Mandataire: **Jacobacci Coralis Harle**
**32, rue de l'Arcade**
**75008 Paris (FR)**

(56) Documents cités:
**US-A1- 2007 092 136**

• **BIST CAMBODGE ET AL: "Tone expansion using lighting style aesthetics", COMPUTERS AND GRAPHICS, vol. 62, 15 décembre 2016 (2016-12-15), pages 77-86, XP029900476, ISSN: 0097-8493, DOI: 10.1016/J.CAG.2016.12.006**

EP 3 577 627 B1

**Description**

### 1. Domaine de l'invention

Le domaine de l'invention est celui du traitement d'images numériques et de séquences d'images numériques dont les informations de couleur sont représentées dans un premier intervalle de valeurs, en vue de leur restitution sur un dispositif d'affichage apte à les représenter sur un deuxième intervalle de valeurs, supérieur au premier.

L'invention peut notamment, mais non exclusivement, s'appliquer à la conversion d'intensités de couleurs d'images numériques représentées selon un format standard ou SDR (pour « Standard Dynamic Range », en anglais) en vue de leur restitution sur un dispositif d'affichage conforme à un format HDR (pour « High Dynamic Range », en anglais).

### 2. Présentation de l'art antérieur

On voit apparaître aujourd'hui une nouvelle génération de dispositifs de restitution de contenus audiovisuels, tels que des téléviseurs, dits HDR, qui sont capables d'afficher des images avec une gamme étendue d'intensités de couleurs. Ces écrans offrent un niveau de luminosité très élevé (pour « high peak », en anglais) et des niveaux de contraste accrus entre les zones sombres et claires de l'image, qui procurent à l'utilisateur une proximité inégalée avec la réalité.

Actuellement, cette technologie coexiste encore avec le format SDR, qui reste la référence pour la transmission de contenus audiovisuels, si bien que pour profiter des capacités accrues d'un écran HDR, il est nécessaire de convertir le contenu SDR reçu au format HDR avant de l'afficher.

On connaît de l'article de Bist et al, intitulé « Style Aware Tone Expansion for HDR Displays », publié par la conférence Graphics Interface, qui s'est tenue au Canada en juin 2016, une méthode d'expansion des intensités de couleur d'une image numérique d'entrée, basée sur un exposant d'expansion calculé comme une fonction décroissante d'un niveau global de luminosité de l'image.

Plus précisément, cette méthode consiste à calculer la composante de luminance de l'image de sortie de la façon suivante :

$$Y_2 = L_{MAX} . Y_1^{\gamma} \qquad\qquad (1)$$

avec

$$\gamma = 1 + \log_{10} \frac{1}{L^*_{med,n}}$$

où $Y_1$ désigne la composante de luminance de l'image d'entrée, $Y_2$ la composante de luminance de l'image de sortie, $\log_{10}$ le logarithme décimal, $\gamma$ un exposant d'expansion appliqué à la composante de luminance $Y_1$ et $L_{med,n}^*$ une valeur médiane de luminance normalisée et clippée et $L_{MAX}$ la valeur maximale de la composante de luminance permise par le dispositif de restitution au format HDR.

Un avantage de cette solution est qu'elle permet un rendu fidèle du style d'éclairage de l'image tout en restant simple à mettre en œuvre au moyen de ressources de calcul limitées compatibles avec des exigences de traitement en temps réel.

On connait également de l'article de Bist et al. intitulé "Tone expansion using lighting style aesthetics" publié dans Computer & Graphics 62, pp. 77-86, une méthode de conversion d'image SDR en image HDR qui cherche à préserver la perception des couleurs dans l'image HDR obtenue.

Enfin, le brevet US2007/0092136 décrit une méthode d'amélioration de contraste par égalisation d'histogrammes dans laquelle l'amélioration de contraste dépend du nombre de pixels brillants de l'image.

### 3. Inconvénients de l'art antérieur

Un inconvénient de cette méthode est qu'elle ne prend pas en considération le confort visuel d'un observateur de l'image affichée sur le dispositif de restitution.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution d'expansion de gamme de valeurs de luminance qui préserve le confort visuel de l'utilisateur.

Un autre objectif de l'invention est de contrôler l'expansion de gamme des intensités de couleurs d'une image lors d'une conversion de son format de façon à prendre en compte une valeur de luminosité maximale tolérée par l'utilisateur.

## 5. Exposé de l'invention

Ces objectifs, ainsi que d'autres qui apparaîtront par la suite, sont atteints à l'aide d'un procédé de traitement d'au moins une image numérique destinée à être restituée sur un dispositif d'affichage, ladite image comprenant des éléments d'image, un élément d'image étant associé à des informations de couleur comprenant, dans un premier espace colorimétrique, une composante de luminance et des composantes de chrominance, ladite composante de luminance ayant une valeur comprise dans un premier intervalle de valeurs prédéterminées, ledit dispositif étant apte à restituer des valeurs de luminance comprises dans un deuxième intervalle de valeurs prédéterminées, de longueur supérieure à celle du premier intervalle, ledit procédé comprenant les étapes suivantes :

- Comptage d'un nombre d'éléments d'image, dits éléments « brillants », dont au moins la composante de luminance a une valeur supérieure à un premier seuil prédéterminé ;

- Evaluation d'une valeur de luminosité maximale tolérée comme une fonction décroissante du nombre d'éléments d'image compté ; et

- Transformation des premières composantes de luminance des éléments de l'image en deuxième composantes de luminance, comprenant pour un élément de l'image, le calcul d'une valeur intermédiaire de luminance par application d'un exposant d'expansion à la première valeur de composante de luminance et la multiplication de la valeur intermédiaire calculée par la valeur de luminosité maximale tolérée évaluée.

L'invention permet ainsi de contrôler la gamme de valeurs de luminance possibles dans le deuxième intervalle de valeurs, en fonction d'une quantité d'éléments d'image brillants présents dans l'image. Contrairement à l'art antérieur, elle propose de restreindre d'autant plus cette gamme de valeurs que la quantité de ces éléments d'image est importante, de façon à limiter la gêne oculaire perçue par un utilisateur qui visualise l'image affichée.

Selon un aspect de l'invention, l'étape de comptage des éléments « brillants » comprend en outre les étapes suivantes :

- Conversion des composantes des informations de couleur dans un deuxième espace colorimétrique, comprenant une composante de luminance et une composante de saturation de couleur ;

- Parcours des éléments de l'image comprenant, pour un élément d'image, les sous-étapes suivantes :

  ∘ Comparaison de la composante de luminance au premier seuil;

  ∘ Lorsque la composante de luminance est supérieure au premier seuil, comparaison d'un produit de la composante de luminance et de la composante de saturation à un deuxième seuil et à un troisième seuil supérieur au deuxième;

  ∘ Incrémentation d'un nombre d'éléments d'image « brillants » lorsque le produit est inférieur au deuxième seuil ou supérieur au troisième seuil.

Un avantage de ce premier mode de réalisation est qu'il prend en considération non seulement les pixels très « blancs », mais aussi les pixels à la fois clairs et colorés.

Selon un autre aspect de l'invention, l'étape de comptage comprend un parcours des éléments de l'image, et, pour un élément d'image courant comprenant un vecteur de composantes d'informations de couleur, les sous-étapes suivantes :

- Recherche dans une table d'une information représentative d'un caractère « brillant » de la combinaison de valeurs de composantes d'informations de couleur correspondant à celle du vecteur de l'élément courant; et

- Dans le cas où ladite information a été trouvée, incrémentation d'un nombre d'éléments « brillants » dans l'image.

Un premier avantage de ce mode de réalisation est qu'il évite la conversion dans l'espace colorimétrique HSV, les données traitées étant les composantes d'intensités de couleur RGB. Un deuxième avantage est que la segmentation des combinaisons d'intensité de couleurs correspondant à des éléments « brillants » est faite une fois pour toutes lors de la constitution de la table et que la complexité calculatoire du traitement d'une image s'en trouve ensuite réduite.

Selon un autre aspect de l'invention, le procédé comprend une phase préalable de construction de la table à partir d'un ensemble comprenant toutes les combinaisons possibles de valeurs des composantes d'information de couleur, ladite phase comprenant les étapes suivantes :

- Conversion des composantes des informations de couleur dans un deuxième espace colorimétrique, comprenant une composante de luminance et une composante de saturation de couleur ;

- Parcours des combinaisons, comprenant, pour une combinaison courante, les étapes suivantes :

  ◦ Comparaison de la composante de luminance à un premier seuil;

  ◦ Lorsque la composante de luminance est supérieure au premier seuil, comparaison d'un produit de la composante de luminance et de la composante de saturation à un deuxième seuil et à un troisième seuil inférieur au deuxième;

  ◦ Lorsque le produit est inférieur au deuxième seuil ou supérieur au troisième seuil, enregistrement dans la table d'une information représentative d'un caractère « brillant » de la combinaison courante.

La segmentation des éléments « brillants » est réalisée comme dans le mode de réalisation précédent, mais une fois pour toutes, sur une grande image de test, comprenant toutes les combinaisons possibles de valeurs d'intensité de couleur. Ce mode de réalisation peut être avantageux lorsque l'équipement qui met en œuvre l'invention dispose de capacités de mémoire suffisantes, mais de capacités de calcul limitées.

Selon un autre aspect de l'invention, la valeur de luminosité maximale tolérée est calculée de la façon suivante :

$$L'_{max} = \frac{L_{crit}}{NP_B{}^{\mu}}$$

où $L_{crit}$ désigne une valeur de luminance minimale préférée pour une image comprenant un nombre d'éléments d'image brillants supérieur à 95%, $\mu$ une constante réelle telle que $0<\mu<1$ et $NP_B$ le nombre normalisé d'éléments d'image brillants déterminés, compris entre 0 et 1.

Un avantage de ce mode de réalisation est qu'il est simple à mettre en œuvre.

Les différents modes ou caractéristiques de réalisation mentionnés ci-après peuvent être ajoutés indépendamment ou en combinaison les uns avec les autres, aux caractéristiques du procédé de traitement d'une image ou d'une séquence d'images défini ci-dessus.

L'invention concerne également un dispositif de traitement d'une image ou d'une séquence d'images adapté pour mettre en œuvre le procédé selon l'un quelconque des modes particuliers de réalisation définis ci-dessus. Ce dispositif pourra bien sûr comporter les différentes caractéristiques relatives au procédé de traitement selon l'invention. Ainsi, les caractéristiques et avantages de ce dispositif sont les mêmes que ceux du procédé de traitement et ne sont pas détaillés plus amplement.

Corrélativement, l'invention concerne aussi un équipement terminal apte à et configuré pour obtenir une séquence d'images numériques et pour transmettre une séquence d'images numériques à un dispositif d'affichage (20) apte à et configuré pour la restituer, caractérisé en ce que ledit équipement comprend un dispositif de traitement d'au moins une image numérique selon l'invention.

L'invention concerne aussi un programme d'ordinateur comportant des instructions pour la mise en œuvre des étapes d'un procédé de délestage de code tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de traitement d'une image ou d'une séquence d'images et au dispositif de traitement selon l'invention, éventuellement amovible, mémorisant respectivement un programme d'ordinateur mettant en œuvre un procédé de traitement, tel que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente de façon schématique une chaîne de traitement d'une image ou d'une séquence d'images d'entrée au format SDR apte à fournir une image respectivement une séquence d'images de sortie au format HDR ;

- la figure **2** présente des exemples d'images tests utilisées pour évaluer un niveau de luminosité préféré perçu par un panel d'utilisateurs ;

- la figure **3** présente sous forme d'un diagramme de boîtes les valeurs de luminosité préférées des utilisateurs pour un ensemble d'images testées;

- la figure **4** présente de façon schématique les étapes d'un procédé de traitement d'une image ou d'une séquence d'images d'entrée selon l'invention ;

- la figure **5** décrit de façon plus détaillée les étapes de comptage d'un nombre d'éléments d'image « brillants » susceptibles de provoquer un inconfort pour l'utilisateur, et de calcul d'une valeur de luminosité maximale tolérée en fonction de ce nombre d'éléments, selon un premier mode de réalisation de l'invention ;

- la figure **6** présente des exemples de segmentation d'éléments d'images « brillants » susceptibles de provoquer un inconfort pour l'utilisateur, selon l'invention ;

- les figures **7A** à **7D** présentent une localisation des éléments d'images « brillants » segmentés dans des représentations de l'espace colorimétrique utilisé ;

- la figure **8** présente de façon schématique les étapes d'un procédé de traitement d'une image ou d'une séquence d'images selon un deuxième mode de réalisation de l'invention ;

- la figure **9** décrit de façon plus détaillée les étapes de comptage d'un nombre d'éléments d'image « brillants » susceptibles de provoquer un inconfort pour l'utilisateur, selon le deuxième mode de réalisation de l'invention ;

- la figure **10** présente une courbe d'évolution d'une valeur de luminosité maximale tolérée telle qu'évaluée par le procédé selon l'invention et des valeurs de luminosité préférée des utilisateurs pour une image donnée, en fonction d'un nombre d'éléments d'image « brillants » ; et

- la figure **11** présente de façon schématique un exemple de structure matérielle d'un dispositif de traitement d'une image ou d'une séquence d'images selon un mode de réalisation de l'invention.

## 7. Description d'un mode de réalisation particulier de l'invention

Le principe général de l'invention repose sur le comptage d'un nombre d'éléments d'image dits « brillants » présents dans une image d'entrée, susceptibles de provoquer un inconfort d'un observateur de l'image de sortie restituée sur un dispositif d'affichage, et sur le calcul d'une valeur de luminosité maximale tolérée en fonction du nombre d'éléments d'image déterminé. Cette valeur est ensuite mise en œuvre pour étendre la gamme de valeurs des informations de couleur de l'image d'entrée de façon contrôlée, et obtenir une image de sortie, à la fois adaptée au dispositif d'affichage et respectant le confort visuel de l'observateur.

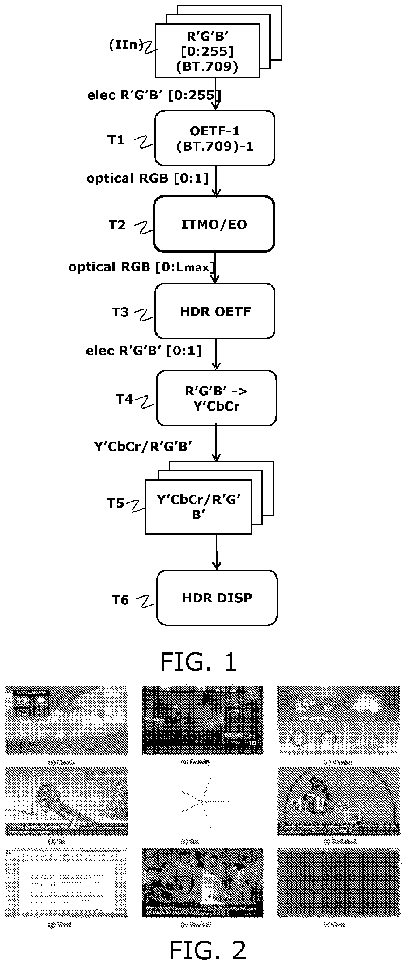

En relation avec la Figure **1**, on considère une chaîne de traitement d'une séquence d'images d'entrée $(II_n)$ au format SDR, avec n entier compris entre 0 et N, avec N entier non nul, en vue de son affichage au format HDR.

Les images de la séquence d'entrée sont bidimensionnelles (2D). Leurs éléments sont des pixels. Bien sûr, l'invention n'est pas limitée à cet exemple et s'applique aussi à des images tridimensionnelles (3D) ou multivues, dont les éléments sont des voxels.

Les images de cette séquence peuvent prendre différentes dimensions spatiales telles que par exemple des images SD (pour « Standard Définition »), en anglais, HD (pour High definition », en anglais), UHD (pour « Ultra High Definition », en anglais), 4K, qui correspond à quatre fois la définition d'une image HD et 8K, qui correspond à seize fois la définition d'une image HD. La séquence d'entrée peut présenter des valeurs de fréquence (pour « frame rate », en anglais) variées parmi les valeurs suivantes de 24, 25, 30, 50, 60, 120 etc. Les intensités de couleur de ses éléments d'images, peuvent être codées sur une profondeur de bits (« bit depth », en anglais) par exemple égale à 8, 10, 12 ou encore 16 bits.

On suppose que cette séquence d'images a préalablement été obtenue soit sous forme brute (pour « raw », en anglais) directement en sortie d'un module d'acquisition, tel que par exemple une caméra vidéo, soit sous forme décompressée en sortie d'un décodeur..

Par exemple, la séquence d'images d'entrée ($II_M$), avec M entier correspondant au nombre d'images dans la séquence, est au format R'G'B' (pour « Red Green Blue », en anglais), tel que spécifié dans la norme BT.709 qui définit les valeurs des paramètres des normes de TVHD pour la production et l'échange international de programmes audiovisuels. Les informations de couleurs sont exprimées selon trois composantes R', G', B' qui prennent chacune des valeurs comprises par exemple entre 0 et 255, lorsqu'elles sont codées sur 8 bits.

Bien sûr, l'invention ne se restreint pas à cet espace colorimétrique et peut aussi bien traiter des images d'entrée conformes à d'autres formats tels que BT.2020, BT.601, DCI-P3, etc.

Ces informations de couleurs R'G'B' correspondent à un codage informatique ou électrique des couleurs des éléments d'image. Une opération de conversion électrique optique est réalisée en $T_1$ pour rétablir les intensités optiques des couleurs de l'image. Les intensités optiques RGB ainsi obtenues prennent des valeurs comprises entre 0 et 1.

Ces intensités optiques RGB sont présentées, en T2 à un module ITMO (pour «Inverse Tone Mapping Operator », en anglais) qui a pour fonction d'étendre la gamme de valeurs des intensités de couleur d'un premier intervalle [0 :1] à un deuxième intervalle de valeurs [0 :$L_{MAX}$] où $L_{MAX}$ représente la longueur du deuxième intervalle, $L_{MAX}$ étant un entier supérieur à 1 qui correspond à un facteur d'échelle de luminosité appliqué aux valeurs d'intensités du premier intervalle. Selon l'art antérieur, la valeur de $L_{MAX}$ est égale à la valeur d'intensité de luminance maximale supportée par le dispositif d'affichage, qui peut atteindre sur les téléviseurs actuels une valeur de $L_{CAP}$ = 4000 nits.

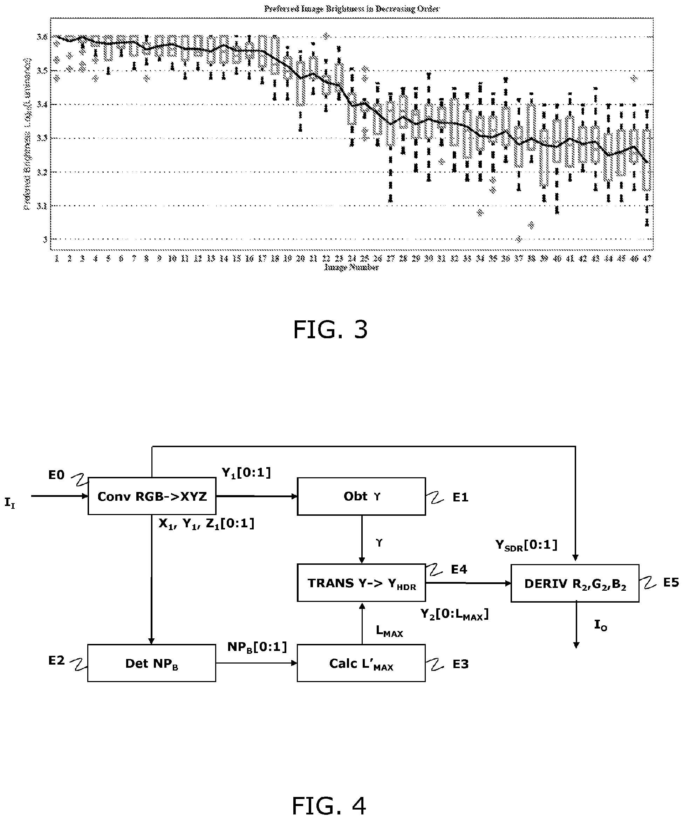

Ce module ITMO met en œuvre un procédé de traitement qui réalise une expansion de la gamme d'intensités de couleurs du premier intervalle de façon à obtenir des intensités de couleur susceptibles de prendre toutes les valeurs du deuxième intervalle de valeurs. Il met par exemple en œuvre le procédé de traitement décrit dans l'article de Bist *et al.* déjà cité et dans ce cas $L_{MAX}$ = $L_{CAP}$, ou bien le procédé selon l'invention qui va être présenté ci-après en relation avec la Figure **3.** A la sortie de ce module, la séquence d'images produite est au format optique RGB avec des intensités potentiellement comprises entre 0 et $L_{MAX}$.

Chaque image de la séquence est soumise en T3 à une opération inverse de conversion optique électrique de façon à obtenir en sortie une séquence d'images dont les intensités de couleur correspondent à un codage informatique exploitable pour un dispositif d'affichage, tel qu'un téléviseur. Par exemple, la conversion mise en œuvre fournit des intensités de couleur au format $Y'C_bC_r$ qui décompose les intensités de couleurs en une composante de luminance Y' séparée des composantes de chrominance $C_b$, $C_r$. Ce format $Y'C_bC_r$ est une manière de représenter l'espace colorimétrique en vidéo classiquement utilisée dans les chaînes de transmission. Ces composantes sont codées sur 10 bits. En variante, une conversion supplémentaire fournit en T4 une séquence d'images de sortie au format R'G'B', codée sur au moins 10 bits.

La séquence d'images obtenue est transmise en T5 à un dispositif d'affichage, tel que par exemple un téléviseur numérique HDR conforme à la norme BT2100.

On présente les résultats d'une expérimentation menée par les inventeurs pour évaluer un niveau de luminosité préféré perçue par un panel d'utilisateurs testeurs. Des images ayant subi une expansion de gamme SDR vers HDR leur sont présentées. En relation avec la figure **2**, un ensemble d'images de test comprend des images de types variés, telles que des images naturelles, des images de synthèse, des documents textes, des graphiques réalisés par ordinateur, des fonds d'écran etc, avec une résolution 8 bits Full HD (1920x1080) dans l'espace colorimétrique RGB. Le dispositif d'affichage utilisé dispose d'une valeur pic de luminosité $L_{CAP}$ de 4000 nits. Chaque image est d'abord affichée avec un facteur d'échelle $L_{MAX}$ = $L_{CAP}$. On demande à l'utilisateur testeur s'il trouve l'image visuellement confortable ou bien si elle est trop lumineuse. Si l'utilisateur testeur considère que l'image est trop lumineuse, alors on lui donne la possibilité de réajuster le facteur d'échelle jusqu'à ce que le niveau de luminosité devienne confortable pour lui. On passe ensuite à l'image suivante.

Les résultats obtenus par cette étude sont illustrés par la figure **3.** Cette figure présente une représentation graphique comprenant en abscisse les numéros d'images réordonnées selon un niveau de luminosité décroissant et, en ordonnée les valeurs de luminosité préférées des utilisateurs du panel notamment sous la forme d'un diagramme en boîtes (pour « box and whisker plot », en anglais). Une boîte est obtenue en traçant un rectangle du premier quartile au troisième quartile en passant par la médiane, laquelle est représentée par un trait horizontal. Ce type de diagramme procure un moyen rapide de figurer le profil essentiel d'une série statistique quantitative. Cette représentation met en évidence le fait que la valeur de luminosité préférée des utilisateurs n'est pas toujours la valeur maximale de luminance $L_{CAP}$ permise par le dispositif de restitution.

Cette courbe montre d'une part que la valeur de luminosité préférée des utilisateurs peut être inférieure à la valeur pic de luminosité $L_{CAP}$ permise par le dispositif d'affichage et, d'autre part qu'elle dépend fortement du contenu présenté aux utilisateurs.

La Figure **3** présente aussi une courbe construite à partir des valeurs de moyenne tronquée à 5% du diagramme en boîtes. Les inventeurs ont constaté que cette moyenne tronquée constituait une bonne approximation d'une valeur de luminosité préférée des utilisateurs testés.

Pour préserver le confort visuel des utilisateurs, il est donc primordial de contrôler le niveau de luminosité maximale de l'image affichée avec une gamme de valeurs d'informations de couleurs plus étendue que l'intervalle d'intensités de couleurs de l'image d'entrée.

Les inventeurs ont d'abord tenté de modéliser cette valeur de luminosité préférée des utilisateurs à partir de statistiques de l'image d'entrée, telles que par exemple les statistiques du premier ordre, comme la moyenne, la variance, le coefficient de dissymétrie (pour « skewness », en anglais) et le coefficient d'aplatissement (pour « kurtosis », en anglais), en relation avec la notion de style d'image ou ton (pour « image key », en anglais) telles que décrites dans le document de E. Reinhard et al, intitulé "Photographic tone reproduction for digital images," publié dans ACM Transactions on Graphics, vol. 21, no. 3, pp. 267-276, en 2002, ou les statistiques liées à la couleur, comme la clarté (pour « lightness », en anglais) ou le fait d'être coloré ou d'avoir des couleurs éclatantes (pour « colorfulness », en anglais), décrites dans le document de D. Hasler et al, intitulé "Measuring colorfulness in natural images," publié dan Electronic Imaging 2003. International Society for Optics and Photonics, en 2003, pp. 87-95. Ils ont toutefois abouti à la conclusion que ces statistiques étaient inopérantes pour modéliser efficacement la luminosité préférée des utilisateurs pour une image donnée.

Ils ont alors remarqué que la valeur de luminosité préférée des utilisateurs baissait lorsque le nombre d'éléments d'image brillants, susceptibles de provoquer un inconfort de l'utilisateur, augmentait dans l'image affichée sur le moniteur HDR. Sur la base de cette constatation, ils ont mis au point un procédé de traitement d'une image d'entrée qui réalise une expansion de gamme de ses informations de couleurs tout en contrôlant le facteur d'échelle de luminosité appliqué, de façon à s'approcher au plus près de cette valeur de luminosité préférée des utilisateurs et, en tout état de cause, ne pas dépasser une valeur de luminosité maximale tolérée des utilisateurs. Ce contrôle de luminosité est basé sur l'évaluation d'un nombre d'éléments d'image brillants présents dans l'image d'entrée.

En relation avec la figure **4**, on décrit maintenant les étapes de ce procédé selon un premier mode de réalisation de l'invention.

On considère une image d'entrée comprenant N éléments d'image, avec N entier non nul. Par exemple, cette image est au format Full HD et N vaut 1920x1080.

On suppose que les intensités de couleur optiques de l'image d'entrée sont exprimées au format RGB.

Au cours d'une première étape E0, on convertit les intensités de couleur de l'image d'entrée dans un espace colorimétrique qui comprend une composante $Y_1$ de luminance et des composantes $X_1$ et $Z_1$ de chrominance. On comprend que dans cet espace, on sépare une information représentative d'une luminosité de l'image en chacun de ses éléments, des informations dites de chrominance qui en définissent la couleur. On note que l'intervalle de valeurs des composantes X, Y et Z est [0 :1]. La composante $Y_1$ est ensuite exploitée pour déterminer un niveau global de luminosité de l'image d'entrée et calculer, en E1, un exposant d'expansion $\gamma$ comme décrit au paragraphe 3.3 de l'article de Bist *et al*. déjà cité.

Au cours d'une étape E2, on compte un nombre d'éléments d'image, dits « brillants » $NP_B$. On entend par « brillants », les points susceptibles de provoquer une gêne oculaire chez un utilisateur.

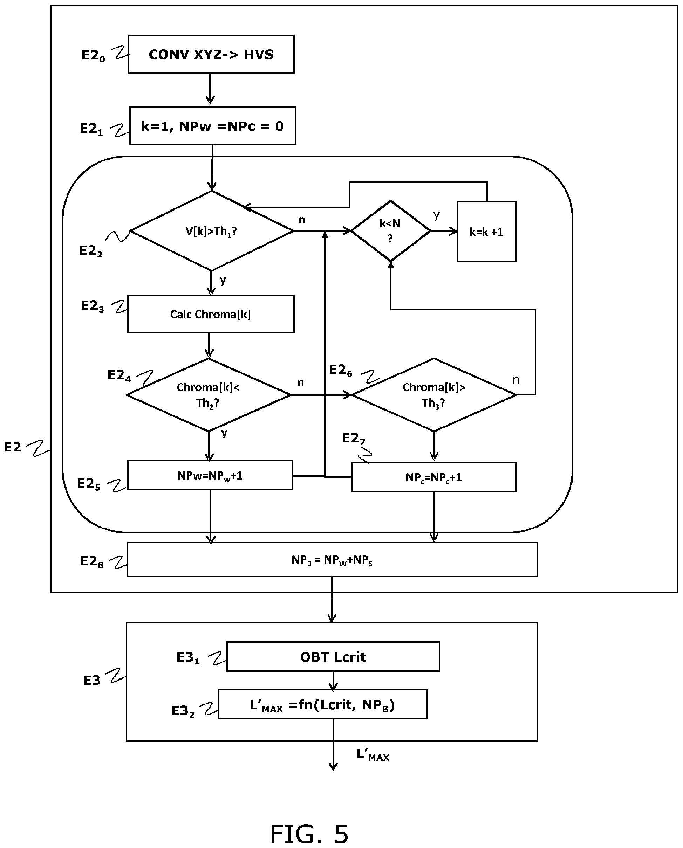

En relation avec la Figure **5**, qui détaille l'étape E2 de comptage selon le premier mode de réalisation de l'invention, cet ensemble d'éléments d'image « brillants » comprend deux sous-ensembles :

- les éléments d'image dits « blancs brillants » ;
- les éléments d'image dits « colorés brillants ».

Au cours d'une étape $E2_0$, on convertit les intensités de couleur du format XYZ vers un espace colorimétrique comprenant au moins une composante de saturation des couleurs, tel que par exemple l'espace Teinte Saturation Valeur TSV ou HSV (pour « *Hue Saturation Value* » en anglais). Il s'agit d'un système de gestion des couleurs comprenant les composantes suivantes :

- Une composante de teinte T, codée suivant un angle qui lui correspond sur un cercle de couleurs :

  • 0° ou 360° pour rouge ;
  • 60° pour jaune ;
  • 120° pour vert ;
  • 180° pour cyan ;

- 240° pour bleu ;
- 300° pour magenta ;

- Une composante de saturation S, qui représente une « intensité » de la couleur :

  - elle varie entre 0 et 100 % ;
  - elle est parfois appelée « pureté » ;
  - plus la saturation d'une couleur est faible, plus l'image est « grisée » et plus elle apparaît fade, il est courant de définir la « désaturation » comme l'inverse de la saturation ;

- Une composante de valeur V, qui représente une valeur de luminance particulière appelée « brillance » de la couleur :

  - elle varie entre 0 et 100 % ;
  - plus la valeur d'une couleur est faible, plus la couleur est sombre. Une valeur de 0 correspond au noir.

On notera que cet espace a été choisi parce qu'il permet de réaliser des calculs rapides. Néanmoins, tout autre espace colorimétrique qui comprend des composantes séparées de saturation et de brillance peut être utilisé, tel que par exemple l'espace CIE-Lab. Il s'agit d'un espace colorimétrique pour les couleurs de surface, défini par la Commission internationale de l'éclairage. (CIE), en même temps que l'espace colorimétrique CIE L*u*v* pour les couleurs de lumière. Fondé sur les évaluations du système CIE XYZ, il a été conçu pour figurer plus fidèlement les écarts entre les couleurs perçues par la vision humaine. Dans ce modèle, trois grandeurs caractérisent les couleurs, la clarté $L^*$, dérivée de la luminance (Y) de l'évaluation XYZ, et deux paramètres $a^*$ et $b^*$, qui expriment l'écart de la couleur par rapport à celle d'une surface grise de même clarté, comme la chrominance d'une séquence d'images.

Au cours d'une sous-étape $E2_1$, on parcourt les N éléments de l'image selon un ordre de parcours prédéterminé. On considère un indice k, avec k entier compris entre 1 et N, qui représente un élément d'image courant de coordonnées (i, j) avec i entier compris entre 1 et 1080 et j entier compris entre 1 et 1920 et on l'initialise à la valeur k=1.

En $E2_2$, on compare la valeur de brillance V[k] de l'élément d'image k courant à un premier seuil $Th_1$ prédéterminé. Si elle est inférieure, l'élément d'image n'est pas considéré comme brillant et on passe à l'élément suivant.

Si elle est supérieure, on calcule en $E2_3$, pour l'élément d'image k, les caractéristiques suivantes :

$$V_T[k] = \begin{Bmatrix} 1\ si\ V[k] > Th_1 \\ 0 \end{Bmatrix} \qquad (2)$$

$$Chroma[k] = S[k].V_T[k] \qquad (3)$$

La caractéristique $V_T$ correspond à une composante de brillance tronquée, égale à 1 lorsque la valeur de la composante de brillance est supérieure à un seuil prédéterminé $Th_1$, par exemple fixé à 0.8, et nulle sinon.

La caractéristique « Chroma », telle que définie par Fairchild et al, dans l'ouvrage intitulé « Color Appearance Models », publié par John Wiley and Sons Ltd en 2005, page 93, section 4.8 « Definitions in Equations », correspond au produit des composantes de saturation S et de brillance V.

Selon l'invention, cette définition s'applique à la composante de brillance tronquée $V_T$, ce qui fait que la valeur de Chroma est nulle lorsque la brillance V est inférieure au premier seuil prédéterminé $Th_1$.

De cette manière, on exclut les éléments d'image qui possèdent une couleur intense (saturation élevée), mais une brillance faible ($V<Th_1$), car ils ne sont généralement pas responsables d'une gêne oculaire de l'utilisateur.

Cette caractéristique Chroma est ensuite exploitée pour déterminer si l'élément d'image courant appartient au groupe des éléments d'image dits « blancs brillants » ou des éléments d'images dits « colorés brillants».

En $E2_4$, on compare la caractéristique Chroma[k] à un deuxième seuil prédéterminé $Th_2$.

Un élément d'image « blanc » Pw est défini comme suit :

$$P_w[k] = \begin{Bmatrix} 1\ si\ Chroma[k] < Th_2 \\ 0\ sinon \end{Bmatrix} \qquad (4)$$

Par exemple le seuil $Th_2$ vaut 0,1.

Si l'élément d'image courant k satisfait la condition, on passe à l'étape $E2_5$. Sinon on réalise l'étape $E2_6$ suivante, qui vise à identifier les éléments d'image dits « colorés ».

Un élément d'image « coloré » $P_c$ est défini comme suit :

$$P_c[k] = \left\{ \begin{array}{l} 1 \; si \; Chroma[k] > Th_3 \\ 0 \; sinon \end{array} \right\} \quad (5)$$

Avec $Th_2 < Th_3$.

Par exemple, le seuil $Th_3$ est choisi égal à 0,8.

Si la condition est satisfaite en $E2_6$, on passe à l'étape $E2_7$.

En $E2_5$ on incrémente donc le nombre $NP_w$ d'éléments « blancs » de l'image. Au cours de l'étape $E2_7$, on a identifié un élément d'image « coloré » supplémentaire. On incrémente donc le nombre $NP_c$ d'éléments « colorés » de l'image.

On teste ensuite s'il reste des éléments d'image à traiter. Si k<N, on incrémente k de 1 et on retourne à l'étape $E2_2$.

Sinon, on réalise l'étape $E2_8$ qui consiste à sommer le nombre d'éléments « blancs brillants » et le nombre d'éléments « colorés brillants» comptabilisés pour l'image courante. On obtient un nombre total d'éléments « brillants » $NP_B$ dans l'image.

Les valeurs de seuillage $Th_1$, $Th_2$ et $Th_3$ données à titre d'exemple ont été fixées empiriquement à partir d'évaluations visuelles réalisées par les inventeurs. Elles peuvent bien sûr être ajustées en fonction de l'espace colorimétrique utilisé.

A l'issue de cette étape E2, on a déterminé un nombre $NP_B$ d'éléments d'image « brillants ».

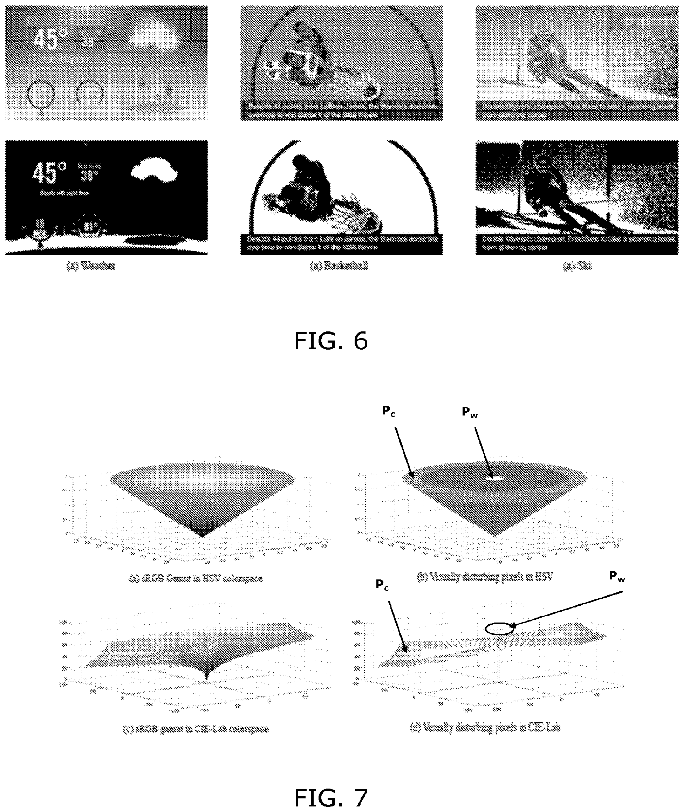

En relation avec la Figure **6**, on présente à titre d'exemple une segmentation des pixels « brillants » réalisée par l'invention sur trois images de la base de tests. Les éléments d'images identifiés comme « brillants » apparaissent en blanc, alors que les autres pixels ont une valeur d'intensité correspondant au noir.

Sur l'image de gauche (« Weather ») qui est une image de synthèse, 14% des pixels sont considérés comme « brillants ». Sur l'image du milieu (« Basket-ball »), qui présente un joueur de basket évoluant sur un fond jaune intense, 58% des pixels sont segmentés comme « brillants » et sur l'image de droite (« Ski ») comprenant un skieur dévalant une piste enneigée, 29% des pixels sont segmentés comme « brillants ». On vérifie que l'invention permet bien de comptabiliser les éléments brillants sur des images de types variés et que le nombre de pixels «brillants » fluctue de façon importante d'un type d'image à l'autre.

En relation avec les Figures **7A** à **7D**, on illustre la localisation des éléments d'images « brillants » ainsi segmentés, d'une part dans une représentation de l'espace colorimétrique HSV pour la Figure **7B** et d'autre part dans l'espace colorimétrique CIE-Lab pour la Figure **7D**. Dans l'espace HSV, les éléments « brillants » sont dans une « tranche » supérieure du cône inversé de la représentation HSV, les éléments « blancs brillants » étant situés autour du centre et les éléments « colorés brillants » étant situés en périphérie. De façon analogue, dans l'espace CIE-Lab, les éléments « blancs brillants » étant situés autour du centre et les éléments « brillants colorés» forment un cadre à la périphérie du nuage de points.

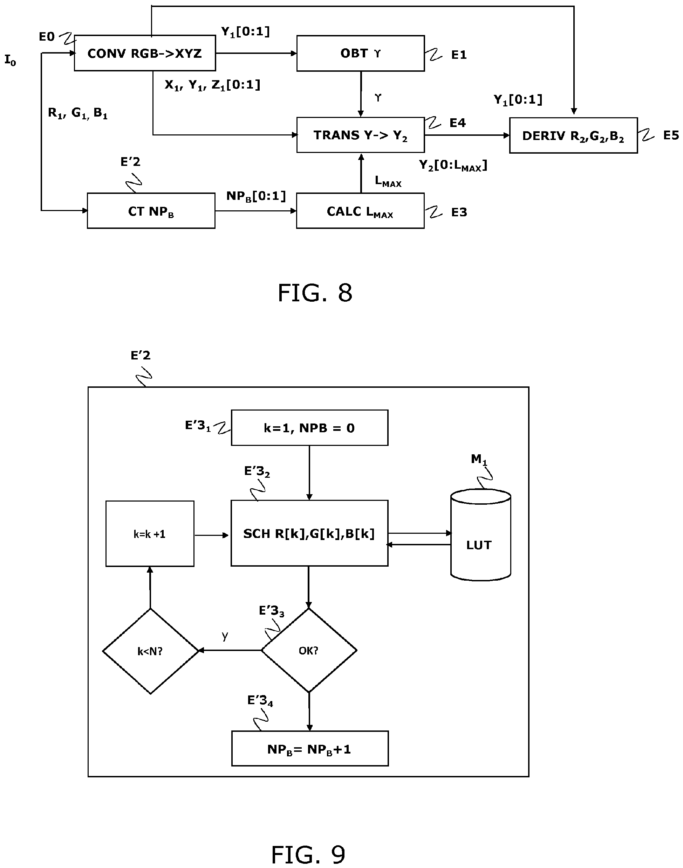

Selon un deuxième mode de réalisation de l'invention, qui va maintenant être décrit en relation avec les figures **8** et **9**, le procédé comprend une étape E'2 de comptage d'un nombre d'éléments d'images « brillants » qui prend en entrée les éléments de l'image II au format RGB.

Cette étape réalise un parcours des K éléments de cette image et, pour un élément courant k, avec k entier inférieur ou égal à K, on recherche en $E'2_1$, si la combinaison de ses valeurs d'intensités de couleur $(R_1[k], G_1[k], B_1[k])$ est présente dans une table LUT préalablement stockée en mémoire $M_1$. Cette table stocke, pour une combinaison de valeurs RGB, une information représentative d'un caractère « brillant » de cette combinaison.

En fonction de la valeur de l'information trouvée dans la table, l'élément courant est considéré en $E'2_2$ comme « brillant » et le nombre d'éléments « brillants » $NP_B$ est incrémenté. Sinon, on passe à l'élément suivant, tant que tous les éléments n'ont pas été parcourus.

A l'issue de cette étape E2, E'2, on connaît le nombre d'éléments « brillants » $NP_B$ présents dans l'image.

On décrit maintenant une méthode pour constituer la table LUT. Avantageusement, elle est préalablement construite à partir d'un ensemble de données d'entrée comprenant toutes les combinaisons possibles de valeurs d'intensité RGB d'une image. Lors d'une phase préalable de construction, on parcourt les combinaisons, et pour chacune d'elles, on détermine si la combinaison de valeurs d'intensités de couleurs correspond à celles d'un élément « brillant ». Avantageusement, on procède de façon similaire à celle de l'étape E2 déjà décrite en relation avec la Figure **5.**

On commence donc par convertir la combinaison dans l'espace colorimétrique HSV. On compare la valeur de brillance V[k] de la combinaison courante à un premier seuil $Th_1$ prédéterminé.

Si elle est inférieure, la combinaison n'est pas considérée comme celle d'un élément « brillant » et on passe à la suivante.

Sinon, on calcule la caractéristique Chroma[k] telle que précédemment décrite et on la compare à un deuxième et un troisième seuils prédéterminés $Th_2$ et $Th_3$, avec $Th_2 < Th_3$

Si les conditions sont satisfaites (Chroma[k]<$Th_2$ ou Chroma[k]>$Th_3$), la combinaison est considérée comme représentative d'un élément « brillant » et on insère cette information dans la table. Selon une première option, on stocke la combinaison courante dans la table LUT. Dans le cas contraire, on ne stocke pas la combinaison dans la liste. Un avantage de cette table est que ses dimensions restent compactes.

En variante, selon une deuxième option, la table LUT prend la forme d'une grande image, tridimensionnelle dans le cas de l'espace colorimétrique RGB, dont les éléments prennent une valeur par exemple égale à 1 pour un élément « brillant » et 0 sinon. Pour une image RGB dont les intensités sont codées sur 8 bits, sa dimension est $256^3$. On comprend que cette image est volumineuse et nécessite des capacités de stockage importantes. En revanche, elle permet un accès facile et rapide à l'information stockée.

Au cours d'une étape E3, on estime une valeur de luminosité maximale tolérée $L'_{MAX}$ à partir de ce nombre $NP_B$ obtenu.

Afin de contrôler au mieux la luminosité de l'image de sortie ($IO_m$) et de garantir qu'elle corresponde au niveau de luminosité préféré des utilisateurs, les inventeurs proposent de modéliser une valeur de luminosité maximale tolérée de la façon suivante :

$$log_{10}(L'_{MAX}) = -0.2118 . log_{10}(NP_B) + 3.28 \qquad (6)$$

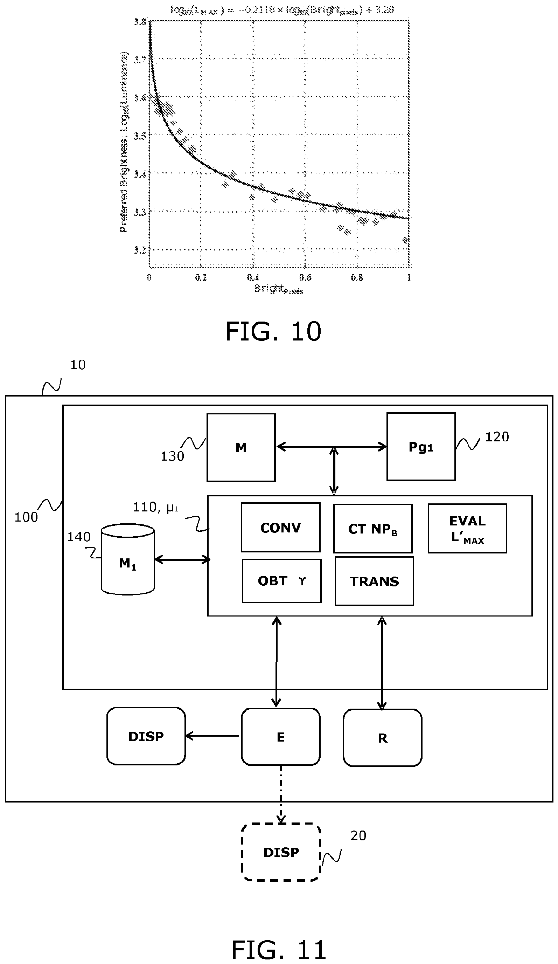

Sur la Figure **10,** on a représenté la courbe des valeurs de $log_{10}(L'_{MAX})$ en fonction du nombre de points brillants déterminé $NP_B$. On voit qu'elle correspond bien aux valeurs moyennes tronquées de luminosité maximale préférée par les utilisateurs testeurs. Plus précisément, la mesure de validité obtenue (pour « Goodness of fit», en anglais) vaut $R^2$ = 0.9267.

On peut généraliser ce modèle en résolvant l'équation précédente. On obtient :

$$L'_{MAX} = \frac{L_{Crit}}{NP_B{}^\mu} \qquad (7)$$

Où $L_{Crit}$ correspond à une valeur de luminosité préférée minimale pour un contenu très brillant, comprenant par exemple un nombre d'éléments « brillants » $NP_B$ supérieur à 0.95 et $\mu$ est une constante réelle, choisie égale à 0.2118.

On notera que ce modèle permet de prédire une valeur de luminosité maximale tolérée supérieure dans certains cas à la borne maximale $L_{CAP}$ de l'intervalle de valeurs du dispositif d'affichage, par exemple égale à 4000 nits pour un moniteur tel que l'écran prototype SIM2 HDR47. Pour éviter que le niveau de luminosité maximale toléré $L'_{MAX}$ tende vers l'infini, lorsque le nombre d'éléments d'image « brillants » tend vers zéro, on borne les valeurs possibles de $NP_B$ à l'intervalle [0.001, 1].

En E4, on exploite la valeur de $L'_{MAX}$ calculée pour réaliser une expansion de gamme des valeurs de luminance de l'image d'entrée. Par exemple, comme décrit dans le document de Bist et al. déjà cité, on leur applique le coefficient d'expansion $\gamma$ obtenue en E2, selon l'équation (1), dans laquelle la borne supérieure $L_{MAX}$ de l'intervalle de valeurs d'intensité offerte par le dispositif d'affichage est remplacée par la valeur de luminosité maximale tolérée $L'_{MAX}$ évaluée selon l'invention :

$$Y_2 = L'_{MAX} . Y_1^\gamma$$

$$(1')$$

En E5, on dérive ensuite de la composante de luminance obtenue les valeurs d'intensité lumineuse de l'image de sortie dans l'espace colorimétrique RGB, par exemple de la façon suivante :

$$R_2 = \frac{R_1 . Y2}{Y_1} \qquad (8)$$

$$G_2 = \frac{G_1 . Y2}{Y_1} \qquad (9)$$

$$B_2 = \frac{B_1 . Y2}{Y_1} \qquad (10)$$

Où $R_1$, $G_1$, $B_1$ sont les valeurs d'intensité de couleur de l'image d'entrée ($II_m$) dans l'espace colorimétrique RGB et $R_2$, $G_2$, $B_2$ celles de l'image de sortie ($IO_m$).

Selon une variante, l'étape E6 comprend une sous-étape de correction des composantes de couleurs, selon laquelle le coefficient d'expansion appliqué à une valeur d'intensité lumineuse d'entrée $R_1$, $G_1$, $B_1$ n'est plus directement proportionnel au ratio $Y_2/Y_1$, comme dans le mode de réalisation précédent, mais est fonction de la valeur d'entrée de la composante de couleur et d'un facteur de saturation s, qui est un réel strictement supérieur à 1, par exemple, selon l'expression suivante :

$$R_2 = \left(\left(\frac{R_1}{Y_1} - 1\right).s + 1\right)Y_2 \qquad (11)$$

$$G_2 = \left(\left(\frac{G_1}{Y_1} - 1\right).s + 1\right)Y_2 \qquad (12)$$

$$B_2 = \left(\left(\frac{B_1}{Y_1} - 1\right).s + 1\right)Y_2 \qquad (13)$$

Par exemple, le facteur de saturation s est choisi par exemple égal à 1.25.

Un avantage de cette deuxième correction est qu'en saturant les intensités des composantes de couleur, elle permet d'obtenir un rendu de couleurs plus intense.

On obtient ainsi une image de sortie ($IO_m$) dont les intensités de couleurs prennent une gamme de valeurs plus étendue et adaptée à l'amplitude offerte par le dispositif d'affichage, tout en garantissant le confort visuel de l'utilisateur.

Pour une séquence d'images, on répète les étapes E0 à E6 pour chaque image.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

En relation avec la figure **11,** on présente maintenant un exemple de structure simplifiée d'un dispositif 100 de codage d'une image numérique selon l'invention. Le dispositif 100 met en œuvre le procédé de codage selon l'invention qui vient d'être décrit.

Cette figure **11** illustre seulement une manière particulière, parmi plusieurs possibles, de réaliser l'algorithme détaillé ci-dessus. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Par exemple, le dispositif 100 comprend une unité de traitement 110, équipée d'un processeur µ1, et pilotée par un programme d'ordinateur Pg1 120, stocké dans une mémoire 130 et mettant en œuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend une machine de calcul reprogrammable ou une machine de calcul dédiée, apte à et configurée pour :

- obtenir une image d'entrée OBT II ;

- convertir CONV les intensités de couleur RGB de l'image d'entrée dans un espace colorimétrique qui comprend une composante Y de luminance et des composantes X et Z de chrominance ;

- Compter CT $NP_B$ un nombre d'éléments d'image, dits éléments « brillants », dont au moins la composante de luminance a une valeur supérieure à un premier seuil prédéterminé ;

- Evaluer EVAL $L'_{MAX}$ une valeur de luminosité maximale tolérée comme une fonction décroissante du nombre d'éléments d'image déterminé ; et

- Transformer TRANS les premières composantes de luminance des éléments de l'image en deuxième composantes de luminance, comprenant pour un élément de l'image, le calcul d'une valeur intermédiaire de luminance par application d'un exposant d'expansion à la première valeur de composante de luminance et la multiplication de la valeur intermédiaire calculée par la valeur de luminosité maximale tolérée.

Avantageusement, la machine de calcul est configurée pour mettre en œuvre les modes de réalisation de l'invention qui viennent d'être décrits en relation avec les Figures **4, 5, 8** et **9**. Notamment, dans le premier mode de réalisation, elle convertit les composantes X, Y, Z en composantes de brillance et de saturation V et S, compare la composante V à un premier seuil et le produit de V et de S à un deuxième et un troisième seuils. Dans le deuxième mode de réalisation de l'invention, elle va chercher une information représentative d'un caractère « brillant » des intensités de couleur des éléments de l'image, dans une table LUT stockée en mémoire.

Le dispositif 100 comprend en outre une unité $M_1$ 140 de stockage, telle qu'une mémoire, par exemple de type mémoire tampon (pour « buffer », en anglais), apte à stocker par exemple le nombre d'éléments d'image « brillants » et la valeur de luminosité maximale tolérée L'$_{MAX}$ évaluée. Dans le deuxième mode de réalisation, elle peut aussi stocker la table LUT.

Ces unités sont pilotées par le processeur $\mu$1 de l'unité de traitement 110.

De façon avantageuse, un tel dispositif 100 peut être intégré à un équipement terminal d'utilisateur TU, par exemple un ordinateur, un boîtier décodeur TV (pour« set top box », en anglais), ou encore un téléviseur numérique. Le dispositif 100 est alors agencé pour coopérer au moins avec les modules suivants du terminal TU :

- un module E/R d'émission/réception de données, par l'intermédiaire duquel un signal comprenant des données codées représentatives de la séquence d'images d'entrée est reçu d'un réseau de télécommunications, par exemple un réseau radio, filaire ou hertzien ; et/ou

- un module d'acquisition de la séquence d'images d'entrée, tel que par exemple une caméra vidéo, par exemple via un câble HDMI ;

- un dispositif d'affichage, configuré pour restituer des images ayant une gamme d'intensités de couleur étendue, par exemple un téléviseur SIM2 HDR47 prototype comprenant un panel LCD avec un rétroéclairage modulé LCD. Il offre une luminosité maximale de 4000 nits et un contraste de 20,000:1.

Grâce à ses bonnes performances et à sa simplicité de mise en œuvre, l'invention qui vient d'être décrite permet plusieurs usages. Sa première application est la conversion de contenus vidéo au format SDR en une version affichable sur un dispositif de restitution HDR, qui à la fois préserve le style originel des images et garantit le confort visuel des utilisateurs. Par exemple, elle peut être mise en œuvre à réception d'un contenu vidéo diffusé en temps réel (« live », en anglais) au format SDR, comme post traitement, en vue de son affichage de la séquence d'images sur un écran HDR.

Pour la production de contenus TV en temps réel mettant en œuvre plusieurs modules d'acquisition, SDR et HDR, elle peut être utilisée pour convertir à la volée un contenu SDR en HDR avant son mixage avec des contenus HDR. Elle peut aussi trouver son intérêt dans la post production cinématographique.

Enfin, l'invention peut être mise en œuvre, en tout point d'une chaîne de transmission pour transcoder un contenu transmis au format HDR BT.709 dans un format HDR, tel que spécifié par le standard BT2100.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention qui est défini par les revendications.

**Revendications**

1. Procédé de traitement d'au moins une image numérique destinée à être restituée sur un dispositif d'affichage, ladite image comprenant des éléments d'image, un élément d'image étant associé à des informations de couleur comprenant, dans un premier espace colorimétrique, une composante de luminance ($Y_1$) et des composantes de chrominance, ladite composante de luminance ayant une valeur comprise dans un premier intervalle de valeurs prédéterminées, ledit dispositif étant apte à restituer des valeurs de luminance comprises dans un deuxième intervalle de valeurs prédéterminées, de longueur supérieure à celle du premier intervalle, ledit procédé comprenant les étapes suivantes :

   - Comptage (E2, E'2) d'un nombre d'éléments d'image, dits éléments « brillants », dont au moins la composante de luminance a une valeur supérieure à un premier seuil prédéterminé ;
- Evaluation (E4) d'une valeur de luminosité maximale tolérée comme une fonction décroissante du nombre d'éléments d'image compté ; et
- Transformation (E5) des premières composantes de luminance des éléments de l'image en deuxième composantes de luminance, comprenant pour un élément de l'image, le calcul d'une valeur intermédiaire de luminance par application d'un exposant d'expansion à la première valeur de composante de luminance et la multiplication de la valeur intermédiaire calculée par la valeur de luminosité maximale tolérée évaluée.

2. Procédé de traitement selon la revendication **1, caractérisé en ce que** l'étape de comptage (E2) comprend en outre les étapes suivantes :

- Conversion (E2$_0$) des composantes des informations de couleur dans un deuxième espace colorimétrique, comprenant une composante de luminance et une composante de saturation de couleur ;
- Parcours des éléments de l'image et, pour un élément d'image, les sous-étapes suivantes :

  ∘ Comparaison de la composante de luminance au premier seuil (E2$_2$) ;
  ∘ Lorsque la composante de luminance est supérieure au premier seuil, comparaison d'un produit de la composante de luminance et de la composante de saturation à un deuxième seuil (E2$_4$) et à un troisième seuil supérieur au deuxième (E2$_6$) ;
  ∘ Incrémentation (E2$_5$, E2$_7$) d'un nombre d'éléments d'image « brillants » lorsque le produit est inférieur au deuxième seuil ou supérieur au troisième seuil.

3. Procédé de traitement selon la revendication **1, caractérisé en ce que** l'étape de comptage (E'3) comprend un parcours des éléments de l'image, et, pour un élément d'image courant comprenant un vecteur de composantes d'informations de couleur (R$_1$, G$_1$, B$_1$), les sous-étapes suivantes :

- Recherche dans une table (LUT) d'une combinaison de valeurs de composantes d'informations de couleur correspondant à celle du vecteur de l'élément courant ; et
- Dans le cas où la combinaison de valeurs de composantes d"informations de couleur de l'élément courant a été trouvée, incrémentation d'un nombre (NP$_B$) d'éléments « brillants » dans l'image.

4. Procédé de traitement selon la revendication **3, caractérisé en ce qu'**il comprend une phase préalable de construction de la table à partir d'un ensemble comprenant toutes les combinaisons possibles de valeurs des composantes d'information de couleur, ladite phase comprenant les étapes suivantes :

- Conversion des composantes des informations de couleur dans un deuxième espace colorimétrique, comprenant une composante de luminance et une composante de saturation de couleur ;
- Parcours des combinaisons, comprenant, pour une combinaison, les étapes suivantes :

  ∘ Comparaison de la composante de luminance à un premier seuil ;
  ∘ Lorsque la composante de luminance est supérieure au premier seuil, comparaison d'un produit de la composante de luminance et de la composante de saturation à un deuxième seuil et à un troisième seuil supérieur au deuxième seuil ;
  ∘ Lorsque le produit est inférieur au deuxième seuil ou supérieur au troisième seuil, enregistrement d'une information dans la table représentative d'un caractère « brillant » de la combinaison.

5. Procédé de traitement selon l'une des revendications précédentes, **caractérisé en ce que** la valeur de luminosité maximale tolérée est calculée de la façon suivante :

$$L'_{MAX} = \frac{L_{crit}}{P_B{}^\mu}$$

où L$_{crit}$ désigne une valeur de luminance minimale préférée pour une image comprenant un nombre d'éléments d'image brillants supérieur à 95%, $\mu$ une constante réelle telle que $0<\mu<1$ et P$_B$ le nombre normalisé d'éléments d'image brillants déterminés, compris entre 0 et 1.

6. Dispositif (100) de traitement d'au moins une image numérique (II$_n$) en vue de sa restitution sur un dispositif d'affichage (20), destinée à être restituée sur un dispositif d'affichage, ladite image comprenant des éléments d'image, un élément d'image étant associé à des informations de couleur comprenant, dans un premier espace colorimétrique, une composante de luminance ($Y_1$) et des composantes de chrominance, ladite composante de luminance ayant une valeur comprise dans un premier intervalle de valeurs prédéterminées, ledit dispositif étant apte à restituer des valeurs de luminance comprises dans un deuxième intervalle de valeurs prédéterminées, de longueur supérieure à celle du premier intervalle, et comprenant une machine de calcul reprogrammable ou une machine de calcul dédiée, apte à et configurée pour :

- Compter (CT $NP_B$) un nombre d'éléments d'image, dits éléments « brillants », dont au moins la composante de luminance a une valeur supérieure à un premier seuil prédéterminé ;
- Evaluer (EVAL $L'_{MAX}$) une valeur de luminosité maximale tolérée ($L'_{MAX}$) comme une fonction décroissante du nombre d'éléments d'image compté ($NP_B$); et
- Transformer (TRANS) des premières composantes de luminance des éléments de l'image en deuxième composantes de luminance, comprenant pour un élément de l'image, le calcul d'une valeur intermédiaire de luminance par application d'un exposant d'expansion à la première valeur de composante de luminance et la multiplication de la valeur intermédiaire calculée par la valeur de luminosité maximale tolérée évaluée.

**7.** Equipement terminal (10) apte à et configuré pour obtenir une séquence d'images numériques et pour transmettre une séquence d'images numériques à un dispositif d'affichage (20) apte et configuré pour la restituer, **caractérisé en ce qu'**il comprend un dispositif (100) de traitement d'au moins une image numérique selon la revendication **6.**

**8.** Produit programme d'ordinateur ($Pg_1$), comprenant des instructions de code de programme pour la mise en œuvre d'un procédé selon l'une quelconque des revendications **1** à **5**, lorsque ledit programme est exécuté sur un ordinateur.

**9.** Médium de stockage lisible par ordinateur et non transitoire, stockant un produit programme d'ordinateur ($Pg_1$) selon la revendication **8.**

**Patentansprüche**

**1.** Verfahren zur Verarbeitung wenigstens eines digitalen Bilds, das dazu bestimmt ist, auf einer Anzeigevorrichtung wiedergegeben zu werden, wobei das Bild Bildelemente aufweist, wobei ein Bildelement mit in einem ersten Farbraum eine Leuchtdichtekomponente ($Y_1$) und Farbartkomponenten aufweisenden Farbinformationen verknüpft ist, wobei die Leuchtdichtekomponente einen in einem ersten Intervall von vorbestimmten Werten liegenden Wert aufweist, wobei die Vorrichtung dazu ausgelegt ist, in einem zweiten, eine größere Länge als das erste Intervall aufweisenden Intervall von vorbestimmten Werten liegende Leuchtdichtewerte wiederzugeben, wobei das Verfahren die folgenden Schritte aufweist:

- Zählen (E2, E'2) einer Anzahl Bildelemente, sogenannter "heller" Elemente, von denen wenigstens die Leuchtdichtekomponente einen größeren Wert als einen ersten vorbestimmten Schwellenwert hat,
- Abschätzen (E4) eines maximalen tolerierten Helligkeitswerts als eine abfallende Funktion der gezählten Anzahl Bildelemente, und
- Umwandeln (E5) der ersten Leuchtdichtekomponenten der Bildelemente in zweite Leuchtdichtewerte mit, für ein Bildelement, dem Berechnen eines mittleren Leuchtdichtewerts durch Anwenden eines Erweiterungsexponenten auf den ersten Wert der Leuchtdichtekomponente und dem Multiplizieren des berechneten Mittelwerts mit dem geschätzten maximalen tolerierten Helligkeitswert.

**2.** Verarbeitungsverfahren gemäß Anspruch 1, **dadurch gekennzeichnet, daß** der Schritt des Zählens (E2) außerdem die folgenden Schritte aufweist:

- Umwandeln ($E2_0$) der Komponenten der Farbinformationen in einen eine Leuchtdichtekomponente und eine Farbsättigungskomponente aufweisenden zweiten Farbraum,
- Durchgehen der Elemente des Bildes, und für ein Bildelement die folgenden Unterschritte:

= Vergleichen der Leuchtdichtekomponente mit dem ersten Schwellenwert ($E2_2$),
= wenn die Leuchtdichtekomponente größer als der erste Schwellenwert ist, Vergleichen eines Produkts aus der Leuchtdichtekomponente und der Sättigungskomponente mit einem zweiten Schwellenwert ($E2_4$) und mit einem dritten Schwellenwert ($E2_6$), der größer als der zweite ist,

= Erhöhen ($E2_5$, $E2_7$) einer Anzahl "heller" Bildelemente, wenn das Produkt kleiner als der zweite Schwellenwert oder größer als der dritte Schwellenwert ist.

3. Verarbeitungsverfahren gemäß Anspruch 1, **dadurch gekennzeichnet, daß** der Schritt des Zählens (E'3) ein Durchgehen der Elemente des Bildes und, für ein einen Vektor aus Komponenten von Farbinformationen ($R_1$, $G_1$, $B_1$) aufweisendes laufendes Bildelement, die folgenden Unterschritte aufweist:

- Aufsuchen in einer Tabelle (LUT) einer Kombination von Werten von Farbinformationskomponenten, die diese des Vektors des laufenden Elements entspricht, und
- im Falle, daß die Kombination von Werten von Farbinformationskomponenten des laufenden Elements gefunden worden ist, Erhöhen einer Anzahl ($NP_B$) "heller" Elemente im Bild.

4. Verarbeitungsverfahren gemäß Anspruch 3, **dadurch gekennzeichnet, daß** es eine Vorlaufphase des Erstellens der Tabelle aus einer alle möglichen Kombinationen von Werten der Farbinformationskomponenten enthaltenden Gesamtheit aufweist, wobei diese Phase die folgenden Schritte aufweist:

- Umwandeln der Komponenten der Farbinformationen in einen eine Leuchtdichtekomponente und eine Farbsättigungskomponente aufweisenden zweiten Farbraum,
- Durchgehen der Kombinationen mit, für eine Kombination, den folgenden Schritten:

= Vergleichen der Leuchtdichtekomponente mit einem ersten Schwellenwert,
= wenn die Leuchtdichtekomponente größer als der erste Schwellenwert ist, Vergleichen eines Produkts aus der Leuchtdichtekomponente und der Farbsättigungskomponente mit einem zweiten Schwellenwert und einem dritten Schwellenwert, der größer als der zweite Schwellenwert ist,
= wenn das Produkt kleiner als der zweite Schwellenwert oder größer als der dritte Schwellenwert ist, Aufnehmen einer für eine Eigenschaft "hell" der Kombination repräsentativen Information in die Tabelle.

5. Verarbeitungsverfahren gemäß einem der vorangehenden Ansprüche, **dadurch gekennzeichnet, daß** der maximale tolerierte Helligkeitswert wie folgt berechnet wird:

$$L'_{MAX} = \frac{L_{crit}}{P_B{}^{\mu}}$$

wobei $L_{crit}$ einen minimalen Leuchtdichtewert, der für ein Bild mit einer Anzahl heller Bildelemente von mehr als 95% bevorzugt wird, $\mu$ eine reelle Konstante mit $0 < \mu < 1$ und $P_B$ die normierte Anzahl festgelegter heller Bildelemente zwischen 0 und 1 bezeichnet.

6. Vorrichtung (100) für die Verarbeitung wenigstens eines für eine Wiedergabe auf einer Anzeigevorrichtung bestimmten digitalen Bilds ($II_n$) für dessen Wiedergabe auf einer Anzeigevorrichtung (20), wobei das Bild Bildelemente aufweist, wobei ein Bildelement mit in einem ersten Farbraum eine Leuchtdichtekomponente ($Y_1$) und Farbartkomponenten aufweisenden Farbinformationen verknüpft ist, wobei die Leuchtdichtekomponente einen in einem ersten Intervall von vorbestimmten Werten liegenden Wert aufweist, wobei die Vorrichtung dazu ausgelegt ist, in einem zweiten, eine größere Länge als das erste Intervall aufweisenden Intervall von vorbestimmten Werten liegende Leuchtdichtewerte wiederzugeben, und mit einer umprogrammierbaren Rechenmaschine oder einer eigens dafür vorgesehenen Rechenmaschine, die geeignet und ausgelegt ist zum:

- Zählen (CT $NP_B$) einer Anzahl Bildelemente, sogenannter "heller" Elemente, von denen wenigstens die Leuchtdichtekomponente einen größeren Wert als einen ersten vorbestimmten Schwellenwert hat,
- Abschätzen (EVAL $L'_{MAX}$) eines maximalen tolerierten Helligkeitswerts ($L'_{MAX}$) als eine abfallende Funktion der gezählten Anzahl Bildelemente ($NP_B$), und
- Umwandeln (TRANS) der ersten Leuchtdichtekomponenten der Elemente des Bilds in zweite Leuchtdichtekomponenten mit, für ein Bildelement, dem Berechnen eines mittleren Leuchtdichtewerts durch Anwenden eines Erweiterungsexponenten auf den ersten Wert der Leuchtdichtekomponente und dem Multiplizieren des berechneten mittleren Werts mit dem geschätzten maximalen tolerierten Helligkeitswert.

7. Endgeräteausrüstung (10), die geeignet und dazu ausgelegt ist, eine Folge digitaler Bilder zu erhalten und eine Folge digitaler Bilder an eine Anzeigevorrichtung (20) zu übermitteln, die geeignet und dazu ausgelegt ist, diese wiederzugeben, **dadurch gekennzeichnet, daß** sie eine Vorrichtung (100) zur Verarbeitung wenigstens eines digitalen Bilds gemäß Anspruch 6 aufweist.

**8.** Computerprogrammprodukt ($Pg_1$), das Programmcodeanweisungen für die Durchführung eines Verfahrens gemäß einem der Ansprüche 1 bis 5 enthält, wenn das Programm auf einem Computer durchgeführt wird.

**9.** Durch einen Computer lesbares und nicht flüchtiges Speichermedium, das ein Computerprogrammprodukt ($Pg_1$) gemäß Anspruch 8 speichert.

**Claims**

**1.** A method for processing at least one digital image intended to be reproduced on a display device, said image comprising image elements, an image element being associated with colour information comprising, in a first colour space, a luminance component ($Y_1$) and chrominance components, said luminance component having a value within a first interval of predetermined values, said device being capable of reproducing luminance values within a second interval of predetermined values, of a length greater than that of the first interval, said method comprising the following steps:

- Counting (E2, E'2) a number of image elements, known as "bright" elements, at least the luminance component of which has a value greater than a first predetermined threshold;
- Evaluating (E4) a maximum tolerated brightness value as a decreasing function of the counted number of image elements; and
- Transforming (E5) the first luminance components of the image elements into second luminance components, comprising for an image element, calculating an intermediate luminance value by applying an expansion exponent to the first luminance component value and multiplying the calculated intermediate value by the evaluated maximum tolerated brightness value.

**2.** A processing method according to claim 1, **characterised in that** the counting step (E2) further comprises the following steps:

- Converting ($E2_0$) colour information components into a second colour space, comprising a luminance component and a colour saturation component;
- Scanning the image elements and, for an image element, the following sub-steps:

  ◦ Comparing the luminance component to the first threshold ($E2_2$);
  ◦ When the luminance component is above the first threshold, comparing a product of the luminance component and the saturation component to a second threshold ($E2_4$) and a third threshold above the second ($E2_6$);
  ◦ Incrementing ($E2_5$, $E2_7$) a number of "bright" image elements when the product is below the second threshold or above the third threshold.

**3.** A processing method according to Claim 1, **characterised in that** the counting step (E'3) comprises scanning the elements of the image, and, for a current image element comprising a vector of colour information components ($R_1$, $G_1$, $B_1$), the following sub-steps:

- Searching a table (LUT) for a combination of colour information component values corresponding to that of the vector of the current element; and
- In case the combination of the colour information component values of the current element has been found, incrementing a number ($NP_B$) of "bright" elements in the image.

**4.** A processing method according to Claim 3, **characterised in that** it comprises a preliminary phase of constructing the table from a set comprising all possible combinations of values of the colour information components, said phase comprising the following steps:

- Converting the colour information components into a second colour space, including a luminance component and a colour saturation component;

- Scanning the combinations, including, for a combination, the following steps:

  ◦ Comparing the luminance component to a first threshold;
  ◦ When the luminance component is above the first threshold, comparing a product of the luminance component and the saturation component to a second threshold and a third threshold above the second threshold;
  ◦ When the product is below the second threshold or above the third threshold, recording in the table information representative of a "bright" character of the combination.

5. A processing method according to one of the previous claims, **characterised in that** the maximum tolerated brightness value is calculated as follows:

$$L'_{MAX} = \frac{L_{crit}}{P_B{}^{\mu}}$$

where $L_{crit}$ denotes a preferred minimum luminance value for an image comprising a number of bright image elements greater than 95%, $\mu$ a real constant such that $0<\mu<1$ and $P_B$ the normalised number of determined bright image elements, ranging from 0 to 1.

6. A device (100) for processing at least one digital image ($II_n$) for reproduction on a display device (20), intended to be reproduced on a display device, said image comprising image elements, an image element being associated with colour information comprising, in a first colour space, a luminance component ($Y_1$) and chrominance components, said luminance component having a value within a first interval of predetermined values, said device being capable of reproducing luminance values within a second interval of predetermined values, of a length greater than that of the first interval, and comprising a reprogrammable calculation machine or a dedicated calculation machine, capable of and configured for:

   - Counting (CT $NP_B$) a number of image elements, known as "bright" elements, at least the luminance component of which has a value greater than a first predetermined threshold;
   - Evaluating (EVAL $L'_{MAX}$) a maximum tolerated brightness value ($L'_{MAX}$) as a decreasing function of the counted number of image elements ($NP_B$); and
   - Transforming (TRANS) the first luminance components of the image elements into second luminance components, comprising for an image element, calculating an intermediate luminance value by applying an expansion exponent to the first luminance component value and multiplying the calculated intermediate value by the evaluated maximum tolerated brightness value.

7. A terminal equipment (10) capable of and configured for obtaining a sequence of digital images and for transmitting a sequence of digital images to a display device (20) capable of and configured for reproducing it, **characterised in that** it includes a device (100) for processing at least one digital image according to claim 6.

8. A computer program product ($Pg_1$), comprising program code instructions for implementing a method according to any of claims 1-5, when said program is executed on a computer.

9. A computer-readable and non-transitory storage medium storing a computer program product ($Pg_1$) according to claim 8.

FIG. 1

FIG. 2

**FIG. 3**

**FIG. 4**

FIG. 5

(a) Weather  (a) Basketball  (a) Ski

FIG. 6

(a) sRGB Gamut in HSV colorspace  (b) Visually disturbing pixels in HSV

(c) sRGB gamut in CIE-Lab colorspace  (d) Visually disturbing pixels in CIE-Lab

FIG. 7

FIG. 8

FIG. 9

$$\log_{10}(L_{MAX}) = -0.2118 \times \log_{10}(\text{Bright}_{\text{pixels}}) + 3.28$$

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070092136 A

**Littérature non-brevet citée dans la description**

- **BIST et al.** Style Aware Tone Expansion for HDR Displays. *Graphics Interface,* Juin 2016
- **BIST et al.** Tone expansion using lighting style aesthetics. *Computer & Graphics,* vol. 62, 77-86
- **E. REINHARD et al.** Photographic tone reproduction for digital images. *ACM Transactions on Graphics,* 2002, vol. 21 (3), 267-276
- Measuring colorfulness in natural images. **D. HASLER et al.** Electronic Imaging 2003. International Society for Optics and Photonics, 2003, 87-95
- **FAIRCHILD et al.** Color Appearance Models. John Wiley and Sons Ltd, 2005, 93